(19) Europäisches Patentamt
European Patent Office
Office européen des brevets

(11) EP 1 377 602 B1

(12) **FASCICULE DE BREVET EUROPEEN**

(45) Date de publication et mention de la délivrance du brevet:
**13.07.2011 Bulletin 2011/28**

(21) Numéro de dépôt: **02724404.5**

(22) Date de dépôt: **08.04.2002**

(51) Int Cl.:
***C07K 7/18*** (2006.01) ***B60C 19/08*** (2006.01)
***B60C 1/00*** (2006.01) ***C08K 3/04*** (2006.01)
***C08K 9/06*** (2006.01) ***C08K 9/04*** (2006.01)
***C08K 5/548*** (2006.01) ***C08K 5/54*** (2006.01)
***C08L 21/00*** (2006.01) ***C08L 9/00*** (2006.01)

(86) Numéro de dépôt international:
**PCT/FR2002/001213**

(87) Numéro de publication internationale:
**WO 2002/083719 (24.10.2002 Gazette 2002/43)**

(54) **UTILISATION D'ORGANOXYSILANES POLYSULFURÉS DANS DES COMPOSITIONS D'ÉLASTOMÈRES DIÉNIQUES**

VERWENDUNG VON ORGANOSILOXANPOLYSULFIDE IN DIENISCHE ELASTOMEREN-ZUSAMMENSETZUNGEN

USE OF ORGANOSILOXANE POLYSULPHIDES IN DIENIC ELASTOMERS COMPOSITIONS

(84) Etats contractants désignés:
**AT BE CH CY DE DK ES FI FR GB GR IE IT LI LU MC NL PT SE TR**

(30) Priorité: **10.04.2001 FR 0104877**

(43) Date de publication de la demande:
**07.01.2004 Bulletin 2004/02**

(73) Titulaire: **RHODIA CHIMIE**
**92512 Boulogne Billancourt Cedex (FR)**

(72) Inventeurs:
- **BARRUEL, Pierre**
**F-69340 FRANCHEVILLE (FR)**
- **GUENNOUNI, Nathalie**
**F-69540 IRIGNY (FR)**

(74) Mandataire: **Delenne, Marc et al**
**Rhodia Services**
**Direction de la Propriété Industrielle**
**40, rue de la Haie-Coq**
**93306 Aubervilliers Cedex (FR)**

(56) Documents cités:
**EP-A- 0 764 688** **EP-A- 0 784 072**
**EP-A- 0 941 872** **EP-A- 1 043 357**
**WO-A-02/083782** **DE-A- 2 141 159**
**DE-A- 2 212 239** **DE-A- 19 541 404**
**DE-A- 19 734 295** **US-A- 3 978 103**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 377 602 B1

## Description

La présente invention concerne des organoxysilanes polysulfurés, en particulier leur utilisation comme agent de couplage charge blanche-élastomère dans les compositions de caoutchouc comprenant une charge blanche, notamment une matière siliceuse, à titre de charge renforçante.

Ces agents de couplage sont particulièrement utiles dans la préparation d'articles en élastomères soumis à des contraintes variées telles qu'une variation de température, une variation de sollicitation de fréquence importante en régime dynamique, une contrainte statique importante ou une fatigue en flexion importante en régime dynamique. Des exemples d'articles de ce type sont des bandes de convoyeur, des courroies de transmission de puissance, des tuyaux flexibles, des joints de dilatation, des joints d'appareils électroménagers, des supports jouant le rôle d'extracteurs de vibrations de moteurs soit avec des armatures métalliques, soit avec un fluide hydraulique à l'intérieur de l'élastomère, des câbles, des gaines de câbles, des semelles de chaussures et des galets pour téléphériques.

Des compositions d'élastomères appropriées à la préparation de tels articles doivent présenter les propriétés suivantes :

- des propriétés rhéologiques marquées par des viscosités les plus faibles possibles pour une grande facilité de mise en oeuvre des mélanges crus préparés, en particulier au niveau des opérations d'extrusion et de calandrage ;
- des temps de vulcanisation les plus courts possibles pour atteindre une excellente productivité de l'installation de vulcanisation ;
- d'excellentes propriétés de renforcement conférées par une charge, en particulier des valeurs optimales de module d'élasticité en traction et de résistance à la rupture en traction.

Pour atteindre un tel objectif, de nombreuses solutions ont été proposées qui se sont essentiellement concentrées sur l'utilisation d'élastomère(s) modifiés avec une charge renforçante. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où la charge présente une très bonne aptitude d'une part à s'incorporer dans la matrice lors du mélange avec le (ou les) élastomère(s) et à se désagglomérer, et d'autre part, à se disperser de façon homogène dans la matrice élastomère.

De manière connue, le noir de carbone est une charge qui présente de telles aptitudes, mais ce n'est pas le cas en général pour les charges blanches. L'usage de charge blanche renforçante seule, notamment de silice renforçante seule, s'est révélé inapproprié en raison du faible niveau de certaines propriétés de telles compositions et par voie de conséquence de certaines propriétés des articles mettant en oeuvre ces compositions. Pour des raisons d'affinités réciproques, les particules de charge blanche, notamment de silice, ont une fâcheuse tendance, dans la matrice élastomère, à s'agglomérer entre elles. Ces interactions charge/charge ont pour conséquence néfaste de limiter la dispersion de la charge et donc de limiter les propriétés de renforcement à un niveau sensiblement inférieur à celui qu'il serait théoriquement possible d'atteindre si toutes les liaisons (charge blanche-élastomère) susceptibles d'être créées pendant l'opération de mélange, étaient effectivement obtenues. De surcroît, ces interactions tendent aussi à augmenter la viscosité à l'état cru des compositions élastomères, et donc à rendre leur mise en oeuvre plus difficile qu'en présence de noir de carbone.

Il est connu de l'homme de l'art qu'il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de couplage (charge blanche-élastomère), on entend de manière connue un agent apte à établir une connexion suffisante, de nature chimique et/ou physique, entre la charge blanche et l'élastomère ; un tel agent de couplage, au moins bifonctionnel, a par exemple comme formule générale simplifiée «Y-B-X », dans laquelle:

- Y représente un groupe fonctionnel (fonction Y) qui est capable de se lier physiquement et/ou chimiquement à la charge blanche, une telle liaison pouvant être établie, par exemple, entre un atome de silicium de l'agent de couplage et les groupes hydroxyles (OH) de surface de la charge blanche (par exemple les silanols de surface lorsqu'il s'agit de silice);
- X représente un groupe fonctionnel (fonction X) capable de se lier physiquement et/ou chimiquement à l'élastomère, par exemple par l'intermédiaire d'un atome de soufre ;
- B représente un groupe hydrocarboné permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais sont dépourvus de la fonction X active vis-à-vis de l'élastomère.

Des agents de couplage, notamment silice-élastomère, ont été décrits dans un grand nombre de documents, les plus connus étant des organoxysilanes bifonctionnels porteurs d'au moins une fonction organoxysilyle à titre de fonction Y et, à titre de fonction X, d'au moins une fonction capable de réagir avec l'élastomère telle que notamment un groupe fonctionnel polysulfuré.

Ainsi il a été proposé d'utiliser, comme organoxysilanes polysulfurés, des alkoxysilanes polysulfurés, notamment des polysulfures de bis-trialkoxyl($C_1$-$C_4$)silylpropyle tels que décrits dans de nombreux brevets ou demandes de brevets (voir par exemple FR-A-2 149 339, FR-A-2 206 330, US-A-3 842 111, US-A-3 873 489, US-A-3 997 581). Parmi ces polysulfures, on citera en particulier le tétrasulfure de bis-triéthoxysilylpropyle (en abrégé TESPT) qui est généralement considéré aujourd'hui comme le produit apportant, pour des vulcanisats chargés à la silice, le meilleur compromis en terme de sécurité au grillage, de facilité de mise en oeuvre et de pouvoir renforçant, mais dont l'inconvénient connu est d'être fort onéreux et de devoir être utilisé le plus souvent dans des quantités relativement importantes (voir par exemple brevets US-A-5 652 310, US-A-5 684 171, US-A-5 684 172).

Lors de la préparation des compositions de caoutchouc(s) comprenant des particules de charge blanche renforçante et un agent de couplage de type organoxysilane polysulfuré, il se produit au cours de tout ou partie des étapes de préparation bien connues de l'homme de métier, par exemple au cours de l'étape de malaxage dans un mélangeur interne usuel, une réaction chimique impliquant la partie organoxy du silane et les OH de surface de la charge blanche, par exemple les silanols de surface lorsqu'il s'agit de la silice. Ainsi que cela est décrit dans la littérature [cf. A. Hunsche et coll. Kautschuk Gummi, Kunststoffe, 80, 881 (1997) et Kautschuk Gummi, Kunststoffe, n° 7-8, 525 (1998)], dans le cas de la silice et du TESPT, cette réaction chimique est une réaction de condensation qui s'accompagne d'un important dégagement d'éthanol ; plus précisément, cette réaction chimique permet, lorsque l'on utilise des organoxysilanes, comme le TESPT, porteurs de trois fonctions éthoxy liées au silicium, de libérer jusqu'à trois moles d'éthanol par mole de silane. Cet alcool libéré est à l'origine de problèmes techniques au cours de la transformation ultérieure des compositions de caoutchouc, marqués par l'apparition d'une porosité indésirable lors par l'exemple de l'extrusion des compositions et/ou la formation indésirable de bulles dans le caoutchouc lui-même. De plus, une diminution du dégagement d'alcool est aussi souhaitable pour des raisons d'ordres écologique et sanitaire.

Il a été proposé dans EP-A-1 043 357 de diminuer le dégagement d'alcool par emploi d'un agent de couplage organoxysilane polysulfuré dont le nombre de fonctions organoxy, comme par exemple éthoxy, portées par le silicium est réduit par rapport aux agents de couplage habituellement utilisés comme le TESPT (porteur de trois fonctions éthoxy), et est choisi de préférence égal à une fonction organoxy.

Les exemples donnés dans cet art antérieur illustrent des organoxysilanes disulfurés où les groupes organoxysilyle et disulfure sont reliés entre eux par une rotule divalente propylène, et permettent de comparer le comportement du disulfure de bis-monoéthoxydiméthylsilylpropyle (en abrégé MESPD ; exemple 2 selon l'invention) à celui du disulfure de bis-triéthoxysilylpropyle (en abrégé TESPD ; exemple 1, témoin) ; les résultats obtenus montrent que la composition de caoutchouc utilisant le MESPD libère une quantité d'éthanol qui est réduite de 66 % et conduit à un vulcanisat dont les propriétés mécaniques ne sont pas dégradées par rapport à ce qui se passe avec le témoin TESPD.

On note cependant que, dans la comparaison faite dans EP-A-1 043 357 entre les compositions des exemples 1 et 2, les conditions de vulcanisation sont très différentes : la durée de vulcanisation à 165°C est de 16 minutes pour l'exemple 1 témoin utilisant le TESPD, tandis qu'elle est de 30 minutes pour l'exemple 2 selon l'invention utilisant le MESPD. Or selon ses informations, l'homme de métier sait que la durée de vulcanisation peut avoir une influence sur les propriétés mécaniques des vulcanisats. En reproduisant les expériences des exemples 1 et 2 de EP-A-1 043 357 dans les mêmes conditions de température et de durée de vulcanisation (c'est-à-dire 165°C et 30 minutes), la Demanderesse a constaté que le remplacement de l'agent de couplage triéthoxylé utilisé dans l'exemple 1 témoin (TESPD) par le composé monoéthoxylé utilisé dans l'exemple 2 (MESPD), s'il permet bien de réduire la quantité d'alcool libéré, entraîne par contre au niveau des vulcanisats, en contradiction avec ce qui ressort des exemples de EP-A-1 043 357, une dégradation significative de certaines des propriétés mécaniques, et en particulier les modules aux forts allongements, la résistance à la rupture et l'indice de renforcement (rapport entre un module à fort allongement de 300 % et un module à fort allongement de 100 % ; cet indice de renforcement est corrélé à l'efficacité du couplage de la charge blanche à l'élastomère).

Poursuivant des travaux dans ce domaine de la technique, la Demanderesse a maintenant trouvé que les agents de couplage à base de silanes monoorganoxylés et tétrasulfurés à rotule propylène, qui sont les homologues supérieurs au niveau du groupe polysulfuré des silanes monoorganoxylés et disulfurés à rotule propylène illustrés dans EP-A-1 043 357, et en particulier le tétrasulfure de bis-monoéthoxydiméthylsilylpropyle (en abrégé MESPT) :

- non seulement ne présentent pas les inconvénients marqués par une dégradation des propriétés mécaniques considérées ci-avant quand ils sont comparés, dans les mêmes conditions de vulcanisation, aux agents de couplage triorganoxylés correspondants, et en particulier le TESPT,
- mais encore permettent d'atteindre, quand ils sont comparés - dans les mêmes conditions de vulcanisation - aux silanes homologues inférieurs monoorganoxylés et disulfurés correspondants, et en particulier le MESPD : pour

les compositions à l'état cru : un couple mini moins élevé, un couple maxi et un delta couple plus élevés, ainsi qu'une cinétique de vulcanisation plus rapide ; et pour les vulcanisats : des niveaux de modules aux forts allongements, de résistance à la rupture, d'indice de renforcement (éventuellement) et de dureté (Shore ou autre) plus élevés également ; ce qui, globalement, constitue pour les monoorganoxysilanes tétrasulfurés à rotule propylène un compromis de propriétés rhéologiques et mécaniques plus intéressant que celui obtenu pour les monoorganoxysilanes disulfurés à rotule propylène.

L'invention concerne plus précisément l'utilisation, dans une composition d'élastomère(s) diénique(s) comprenant une charge blanche à titre de charge renforçante, d'au moins un monoorganoxysilane polysulfuré à rotule propylène de formule (III) suivante :

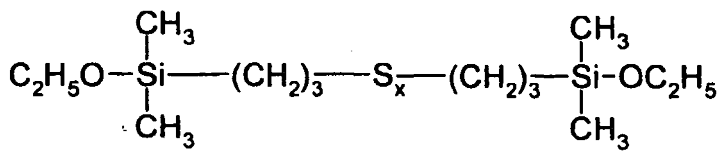

**(III) (en abrégé MESPT)**

dans laquelle le symbole x est un nombre, entier ou fractionnaire, allant de 3,5 ± 0.1 à 4,5 ± 0,1, de préférence de 3,8 ± 0,1 à 4,2 ± 0,1,

pour accélérer; par rapport aux silanes MESPD (disulfure de bis-monoéthoxydiméthylsilylpropyle), TESPD (disulfure de bis-triéthoxysilylpropyle) et TESPT (tétrasulfure de bis-triéthoxysilylpropyle), la cinétique de vulcanisation de l'(des) élastomère(s).

Dans le présent mémoire, on précisera que le symbole x de la formule (III) est un nombre, entier ou fractionnaire, qui représente le nombre d'atomes de soufre présents dans une molécule de formule (III).

Ce nombre peut être un nombre exact d'atomes de soufre dans le cas où la voie de synthèse du composé considéré ne peut donner naissance qu'à une seule sorte de produit polysulfuré.

Mais en pratique ce nombre est la moyenne du nombre d'atomes de soufre par molécule de composé considéré, dans la mesure où la voie de synthèse choisie donne plutôt naissance à un mélange de produits polysulfurés ayant chacun un nombre d'atomes de soufre différent. Dans ce cas, les monoorganoxysilanes polysulfurés synthétisés sont en fait constitués d'une distribution de polysulfures, allant du disulfure $S_2$ à des polysulfures plus lourds $S_{\geq 5}$, centrée sur une valeur moyenne en mole (valeur du symbole x) se situant dans les domaines général (x allant de 3,5 ± 0,1 à 4,5 ± 0,1) et plus préférentiel (x allant de 3,8 ± 0,1 à 4,2 ± 0,1) mentionnés supra. De manière avantageuse, les monoorganoxysilanes polysulfurés synthétisés sont constitués d'une distribution de polysulfures comprenant un taux molaire : de ($S_3$ + $S_4$), égal ou supérieur à 40 % et, de préférence, égal ou supérieur à 50 % ; et de ($S_2$ + $S_{\geq 5}$), égal ou inférieur à 60 % et, de préférence, égal ou inférieur à 50 %. Par ailleurs, le taux molaire de $S_2$ est avantageusement égal ou inférieur à 30 % et, de préférence, égal ou inférieur à 20 %. Toutes les valeurs limites sont données à la précision de mesure (par RMN) près, avec une erreur absolue d'environ ± 1,5 (par exemple 20 ± 1,5 % pour le dernier taux indiqué).

Les monoorganoxysilanes polysulfurés de formule (III) peuvent être obtenus par mise en oeuvre de l'une ou l'autre des méthodes suivantes ou de méthodes apparentées.

<u>Méthode A</u>

Les composés de formule (III) peuvent être obtenus par réaction directe d'un monoorganoxysilane halogéné de formule (V) avec un polysulfure métallique anhydre de formule (VI), en opérant à une température allant de - 20°C à 90°C, en présence éventuellement d'un solvant organique polaire (ou non polaire) inerte, en appliquant le schéma de synthèse suivant :

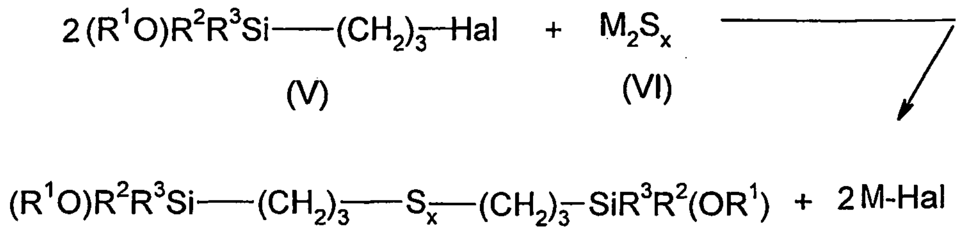

(V) (VI)

schéma 1

où:

- les symboles $R^1$, $R^2$, $R^3$ et x sont tels que définis supra dans l'objet de l'invention ;
- le symbole Hal représente un atome d'halogène choisi parmi les atomes de chlore, brome et iode, et, de préférence, représente un atome de chlore;
- le symbole M représente un métal alcalin ou alcalino-terreux, et, de préférence, représente un métal alcalin choisi parmi le lithium, le sodium et le potassium.

En ce qui concerne la manière pratique de mettre en oeuvre la synthèse précitée, on se reportera pour plus de détails au contenu de EP-A-0 848 006 qui illustre, au départ d'autres réactifs, des modes opératoires applicables à la conduite de la synthèse considérée ; le contenu de cette demande EP est d'ailleurs intégralement incorporé au présent exposé par référence.

Les silanes halogénés de formule (V) sont des produits commerciaux ou des produits facilement préparés à partir de produits commerciaux. Les polysulfures métalliques de formule (VI) peuvent être préparés, par exemple, par réaction d'un sulfure alcalin $M_2S$, contenant de l'eau de cristallisation, avec du soufre élémentaire en opérant à une température allant de 60°C à 300°C, sous vide et en absence d'un solvant organique.

<u>Méthode B</u>

Les composés de formule (III) peuvent être obtenus encore par réaction directe du soufre élémentaire sur un monoorganoxysilane thiol de formule (VII), en opérant à une température allant de 10°C à 250°C, en présence éventuellement d'un solvant organique polaire (ou non polaire) inerte, en appliquant le schéma de synthèse suivant :

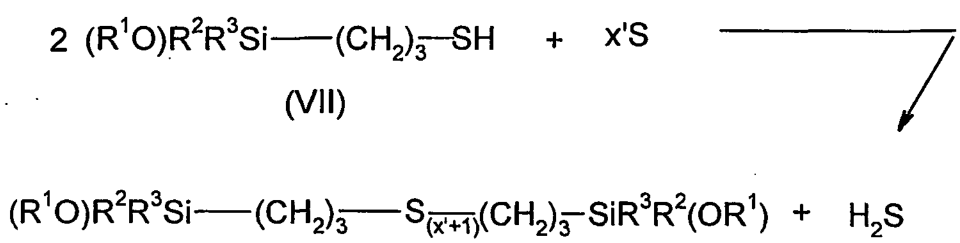

(VII)

schéma 2

où:

- les symboles $R^1$, $R^2$ et $R^3$ sont tels que définis ci-dessus dans la méthode A ;
- x' est un nombre, entier ou fractionnaire, allant de 2,5 ± 0,1 à 3,5 ± 0,1 et plus préférentiellement de 2,8 ± 0,1 à 3,2 + 0,1.

En ce qui concerne la manière pratique de mettre en oeuvre la synthèse précitée, on se reportera pour plus de détails au contenu de FR-A-2 260 585 qui illustre, au départ d'autres réactifs, des modes opératoires applicables à

la conduite de la synthèse considérée ; le contenu de cette demande FR est lui aussi inclus dans la présente demande par référence.

Les silanes thiols de formule (VII) sont des produits commerciaux ou des produits facilement préparés à partir de produits commerciaux.

Méthode C

Les composés de formule (III) peuvent être obtenus encore par réaction directe du soufre élémentaire et d'un métal alcalin M' avec un silane halogéné de formule (V), en opérant à une température allant de 60°C à 100°C, en présence éventuellement d'un solvant organique aprotique, en appliquant le schéma de synthèse suivant :

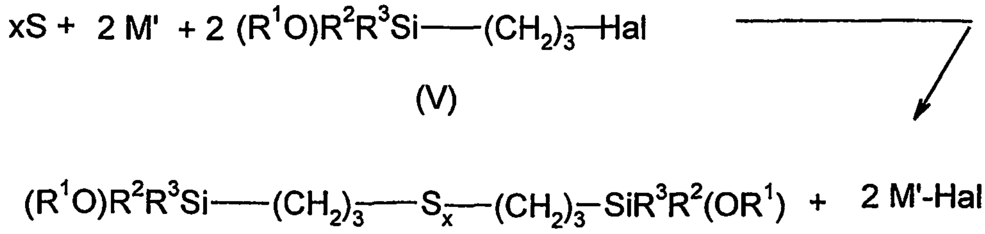

(V)

schéma 3

où :

- les symboles $R^1$, $R^2$, $R^3$, x et Hal sont tels que définis ci-dessus dans la méthode A ;
- le symbole M' représente un métal alcalin et, de préférence, le lithium, sodium ou potassium.

En ce qui concerne la manière pratique de mettre en oeuvre la synthèse précitée, on se reportera pour plus de détails au contenu de US-A-6 066 752 qui illustre, au départ d'autres réactifs, des modes opératoires applicables à la conduite de la synthèse considérée ; le contenu de ce brevet US est lui aussi intégralement incorporé au présent exposé par référence.

Méthode D

Les composés de formule (III) peuvent être obtenus encore, et il s'agit là d'un procédé utilisé de manière préférentielle , par mise en oeuvre des étapes (a) et (b) suivantes :

(a) on met en contact $H_2S$ avec un alkoxyde métallique de formule (VIII), employé sous forme de solution, en opérant à une température allant de 25°C à 60°C, en présence éventuellement d'un solvant organique polaire (ou non polaire) inerte, en appliquant le schéma de synthèse suivant :

$$2\ M'{-}OR + H_2S \longrightarrow M'_2S + 2\ R{-}OH$$

(VIII)

schéma 4

où M' est tel que défini ci-dessus dans la méthode C et R représente un radical alkyle, linéaire ou ramifié, ayant de 1 à 4 atomes de carbone, et, de préférence, représente un radical éthyle ; puis

(b) on fait réagir un mélange à base de soufre élémentaire et de monoorganoxysilane halogéné de formule (V) définie ci-dessus dans la méthode A avec le produit de réaction de l'étape (a), en opérant à une température allant de 25°C à la température de reflux du milieu réactionnel.

En ce qui concerne la manière pratique de mettre en oeuvre les étapes (a) et (b) précitées, on se reportera pour plus de détails au contenu de US-A-5 489 701 qui illustre, au départ d'autres réactifs, des modes opératoires applicables à la conduite de la synthèse considérée ; le contenu de ce brevet US est lui aussi intégralement incorporé au présent exposé par référence.

Méthode E

Les composés de formule (III) peuvent être obtenus encore, et il s'agit là d'un autre procédé utilisé de manière préférentielle , par mise en oeuvre des étapes (c) et (d) ci-après définies :

(c) on met en contact, à la température ambiante de l'ordre de 25˚C, de l'ammoniac $NH_3$ ou une amine avec $H_2S$ et du soufre élémentaire ; puis

(d) on fait réagir le silane halogéné de formule (V) définie ci-dessus dans la méthode A avec le produit de réaction de l'étape (c), en opérant sous pression autogène à une température allant de 0˚C à 175˚C, en présence éventuellement d'un solvant organique polaire (ou non polaire) inerte en appliquant le schéma de synthèse suivant :

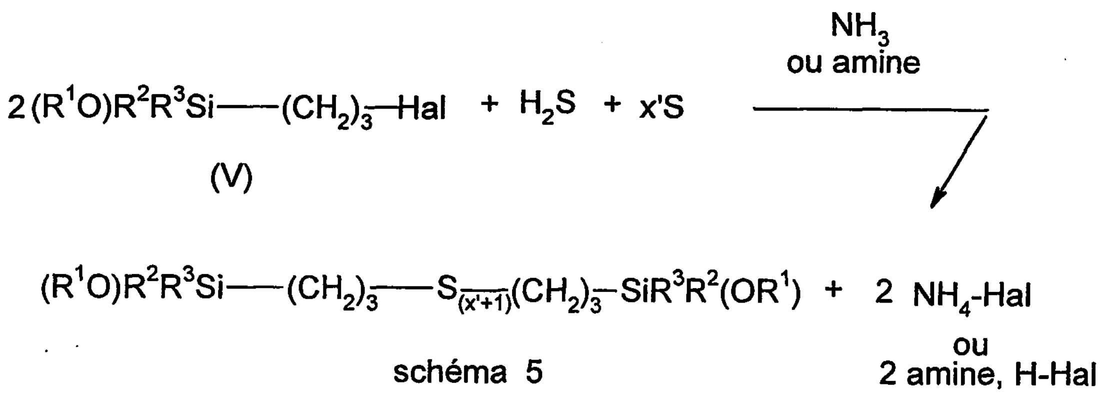


(V)

schéma 5

où les divers symboles R1, R2, R3, Hal et x' sont tels que définis ci-dessus dans les méthodes A et B (pour le symbole x').

En ce qui concerne la manière pratique de mettre en oeuvre les étapes (c) et (d) précitées, on se reportera pour plus de détails au contenu de US-A-4 125 552 qui illustre, au départ d'autres réactifs, des modes opératoires applicables à la conduite de la synthèse considérée ; le contenu de ce brevet US est lui aussi intégralement incorporé au présent exposé par référence.

A noter que, au cours de la réalisation de l'étape (c) précitée, il se forme in situ le composé de formule (IX) $(NH_4)_2S_{(x'+1)}$ ou (X) $(amine)_2S_{(x'+1)}$ qui est en fait le principe actif qui va donner naissance, par réaction avec le silane halogéné de formule (V), au monoorganoxysilane polysulfuré.

Méthode F

Les composés de formule (III) peuvent être obtenus encore, et il s'agit là d'un autre procédé utilisé de manière préférentielle , par mise en oeuvre des étapes (e) et (f) ci-après définies :

(e) on met en contact, à une température allant de 25˚C à 80˚C , en présence éventuellement d'un solvant organique polaire (ou non polaire) inerte, un alkoxyde métallique de formule (VIII) définie ci-dessus dans la méthode D, employé sous forme de solution, avec dans un premier temps du soufre élémentaire et dans un second temps $H_2S$; puis

(f) on fait réagir le silane halogéné de formule (V) définie ci-dessus dans la méthode A avec le produit de réaction de l'étape (e), en opérant à une température allant de 40˚C à 100˚C, éventuellement sous pression autogène, en présence éventuellement d'un solvant organique polaire (ou non polaire) inerte ;

en appliquant le schéma de synthèse suivant :

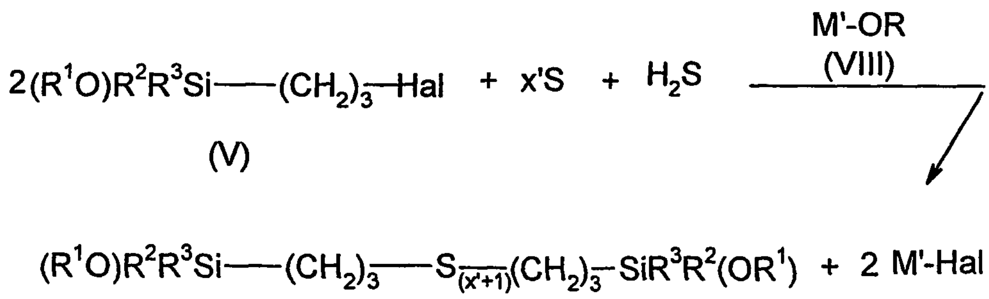

(V)

schéma 6

où les divers symboles $R^1$, $R^2$, $R^3$, Hal, x', M' et R sont tels que définis ci-dessus dans les méthodes A et B (pour x') et D (pour M' et R).

En ce qui concerne la manière pratique de mettre en oeuvre les étapes (e) et (f) précitées, on se reportera pour plus de détails au contenu de US-A-4 125 552 qui illustre, au départ d'autres réactifs et en employant une base aminée à la place d'une base alkoxyde métallique, des modes opératoires applicables à la conduite de la synthèse considérée.

A noter que, au cours de la réalisation de l'étape (e) précitée, il se forme in situ le composé de formule (XI) $M'_2S_{(x'+1)}$ qui est en fait le principe actif qui va donner naissance, par réaction avec le silane halogéné de formule (V), au monoorganoxysilane polysulfuré.

De manière préférée, l'étape (e) précitée est conduite en préparant le mélange alkoxyde métallique + soufre + $H_2S$ à une température allant de 20°C à 25°C, puis en chauffant ensuite le mélange à une température allant de 50°C à 80°C pendant une durée de temps allant de 30 minutes à 2 heures, de manière à compléter la formation du composé de formule (XI) ; ensuite, le milieu réactionnel est refroidit jusqu'à une température allant de 15°C à 25°C avant de commencer le mode opératoire de l'étape (f).

A propos des quantités de réactifs, il doit y avoir au moins deux moles de silane halogéné (V) par mole de $H_2S$ et au moins deux moles de S par mole de $H_2S$. Le nombre d'atomes de soufre élémentaire $S_{(x'+1)}$ dans le groupe polysulfure est fonction du rapport molaire du S par rapport à $H_2S$. Par exemple, l'utilisation de trois moles de S (x' = 3) par mole de $H_2S$ donne le tétrasulfure (x'+1 = 4).

Ci-après est decrite l'utilisation d'une quantité efficace d'au moins un monoorganoxysilane polysulfuré à rotule propylène de formule (III) comme agent de couplage charge blanche-élastomère dans les compositions comprenant au moins un élastomère diénique et une charge blanche à titre de charge renforçante, lesdites compositions étant destinées à la fabrication d'articles en élastomère(s) diénique(s).

Dans le cadre de cette application agent de couplage, les compositions d'élastomère(s) diénique(s) comprenant une charge blanche renforçante obtenues grâce à l'emploi d'une quantité efficace d'au moins un monoorganoxysilane polysulfuré à rotule propylène de formule (III).

Plus précisément, ces compositions comprennent (les parties sont données en poids) :

- pour 100 parties d'élastomère(s) diénique(s),
- 10 à 200 parties de charge blanche renforçante, de préférence 20 à 150 et plus préférentiellement encore 30 à 100 parties,
- 1 à 20 parties, de préférence 2 à 20 parties et plus préférentiellement encore 2 à 12 parties d'agent(s) de couplage.

De manière avantageuse, la quantité d'agent(s) de couplage, choisie dans les zones générales et préférentielles précitées, est déterminée de manière à ce qu'elle représente de 0,5 % à 20 %, de préférence de 1 % à 15 %, et plus préférentiellement de 1 % à 10 % par rapport au poids de la charge blanche renforçante.

L'homme de métier comprendra que l'agent de couplage pourrait être préalablement greffé sur la charge blanche renforçante (via sa fonction alkoxysilyle, notamment éthoxysilyle), la charge blanche ainsi "précouplée" pouvant ensuite être liée à l'élastomère diénique par l'intermédiaire de la fonction libre polysulfure.

Dans le présent mémoire, on entend définir par l'expression "charge blanche renforçante", une charge blanche capable de renforcer à elle seule, sans autre moyen que celui d'un agent de couplage, une composition d'élastomère (s) de type caoutchouc, naturels(s) ou synthétique(s).

L'état physique sous lequel se présente la charge blanche renforçante est indifférent, c'est-à-dire que ladite

charge peut se présenter sous forme de poudre, de microperles, de granulés ou de billes.

De manière préférentielle, la charge blanche renforçante consiste dans la silice, l'alumine ou un mélange de ces deux espèces.

De manière plus préférentielle, la charge blanche renforçante consiste dans la silice, prise seule ou en mélange avec de l'alumine.

A titre de silice susceptible d'être mise en oeuvre conviennent toutes les silices précipitées ou pyrogénées connues de l'homme de l'art présentant une surface spécifique BET≤ à 450 $m^2/g$. On préfère les silices de précipitation, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de silices hautement dispersibles on peut citer celles ayant une surface spécifique CTAB égale ou inférieure à 450 $m^2/g$, allant de préférence de 30 à 400 $m^2/g$, et particulièrement celles décrites dans le brevet US-A-5 403 570 et les demandes de brevets WO-A-95/09127 et WO-A-95/09128 dont le contenu est incorporé ici. Comme exemples non limitatifs de telles silices hautement dispersibles préférentielles, on peut citer la silice Perkasil KS 430 de la société AKZO, la silice BV3380 de la société DEGUSSA, les silices Zeosil 1165 MP et 1115 MP de la société RHODIA, la silice Hi-Sil 2000 de la société PPG, les silices Zeopol 8741 ou 8745 de la société HUBER. Conviennent aussi les silices précipitées traitées telles que par exemple les silices "dopées" à l'aluminium décrite dans la demande de brevet EP-A-0 735 088 dont le contenu est également incorporé ici.

A titre plus préférentiel, conviennent bien les silices de précipitation ayant :

- une surface spécifique CTAB allant de 100 à 240 $m^2/g$, de préférence de 100 à 180 $m^2/g$,
- une surface spécifique BET allant de 100 à 250 $m^2/g$, de préférence de 100 à 190 $m^2/g$,
- une prise d'huile DOP inférieure à 300ml/100 g, de préférence allant de 200 à 295 ml/100g,
- un rapport spécifique BET/surface spécifique CTAB allant de 1,0 à 1,6.

Bien entendu par silice, on entend également des coupages de différentes silices. La surface spécifique CTAB est déterminée selon la méthode NFT 45007de novembre 1987. La surface spécifique BET est déterminée selon la méthode de BRUNAUER, EMMETT, TELLER décrite dans "The Journal of the American Chemical Society, vol. 60, page 309 (1938)" correspondant à la norme NFT 45007 de novembre 1987. La prise d'huile DOP est déterminée selon la norme NFT 30-022 (mars 1953) en mettant en oeuvre le dioctylphtalate.

A titre d'alumine renforçante, on utilise avantageusement une alumine hautement dispersible ayant :

- une surface spécifique BET allant de 30 à 400 $m^2/g$, de préférence de 60 à 250 $m^2/g$,
- une taille moyenne de particules au plus égale à 500 nm, de préférence au plus égale à 200 nm, et
- un taux élevé de fonctions réactives de surface Al-OH, telle que décrite dans le document EP-A-0 810 258.

Comme exemples non limitatifs de pareilles alumines renforçantes, on citera notamment les alumines A125, CR125, D65CR de la société BAïKOWSKI.

Par élastomères diéniques susceptibles d'être mis en oeuvre pour les compositions ,on entend plus précisément :

(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;

(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :

- les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtalène ;
- les monomères nitriles vinyliques ayant de 3 à 12 atomes de carbone, comme par exemple l'acrylonitrile, le méthacrylonitrile ;
- les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;

les copolymères peuvent contenir entre 99 % et 20 % en poids d'unités diéniques et entre 1 % et 80 % en poids d'unités vinyles aromatiques, nitriles vinyliques et/ou esters acryliques ;

(3) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM) ;

(4) le caoutchouc naturel ;

(5) les copolymères obtenus par copolymérisation d'isobutène et d'isoprène (caoutchouc butyle), ainsi que les versions halogénées, en particulier chlorées ou bromée, de ces copolymères ;

(6) un mélange de plusieurs des élastomères précités (1) à (5) entre eux.

A titre préférentiel, on fait appel à un ou plusieurs élastomère(s) choisi(s) parmi : (1) le polybutadiène, le polychloroprène, le polyisoprène [ou poly(méthyl-2 butadiène-1,3)] ; (2) le poly(isoprène-butadiène), le poly(isoprène-styrène), le poly(isoprène-butadiène-styrène), le poly(butadiène-styrène), le poly(butadiène-acrylonitrile) ; (4) le caoutchouc naturel ; (5) le caoutchouc butyle ; (6) un mélange des élastomères nommément précités (1), (2), (4), (5) entre eux ; (6') un mélange contenant une quantité majoritaire (allant de 51 % à 99,5 % et, de préférence, de 70 % à 99 % en poids) de polyisoprène (1) et/ou de caoutchouc naturel (4) et une quantité minoritaire (allant de 49 % à 0,5 % et, de préférence, de 30 % à 1 % en poids) de polybutadiène, de polychloroprène, de poly(butadiène-styrène) et/ou de poly (butadiène-acrylonitrile).

Les compositions contiennent en outre tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :

• s'agissant du système de vulcanisation, on citera par exemple :

- des agents de vulcanisation choisis parmi le soufre ou des composés donneurs de soufre, comme par exemple des dérivés de thiurame ;
- des accélérateurs de vulcanisation, comme par exemple des dérivés de guanidine ou des dérivés de thiazoles ;
- des activateurs de vulcanisation comme, par exemple l'oxyde de zinc, l'acide stéarique et le stéarate de zinc ;

● s'agissant d'autre(s) additif(s), on citera par exemple :

- une charge renforçante conventionnelle consistant dans le noir de carbone ; comme noirs de carbone conviennent tous les noirs de carbone, notamment les noirs du type HAF, ISAF, SAF ; à titre d'exemples non limitatifs de tels noirs, on peut citer les noirs N115, N134, N234, N339, N347, N375 ; la quantité de noir de carbone est déterminée de manière à ce que d'une part la charge blanche renforçante mise en oeuvre représente plus de 50 % du poids de l'ensemble charge blanche + noir de carbone, et d'autre part la quantité de charge renforçante totale (charge blanche + noir de carbone) reste dans les intervalles de valeurs indiqués supra, pour la charge blanche renforçante, à propos de la constitution pondérale des compositions ;
- une charge blanche conventionnelle peu ou non renforçante comme par exemple des argiles, la bentonite, le talc, la craie, le kaolin, le dioxyde de titane ou un mélange de ces espèces ;
- des agents antioxydants ;
- des agents antiozonants, comme par exemple la N-phényl-N'-(diméthyl-1,3 butyl)-p-phénylène-diamine ;
- des agents de plastification et des agents d'aide à la mise en oeuvre.

S'agissant des agents d'aide à la mise en oeuvre, les compositions peuvent contenir des agents de recouvrement de la charge renforçante, comportant par exemple la seule fonction Y, susceptibles de manière connue, grâce à une amélioration de la dispersion de la charge dans la matrice de caoutchouc et à un abaissement de la viscosité des compositions, d'améliorer la faculté de mise en oeuvre des compositions à l'état cru. Pareils agents consistent par exemple dans des alkylakoxysilanes (notamment des alkyltriéthoxysilanes), des polyols, des polyéthers (par exemple des polyéthylèneglycols), des amines primaires, secondaires ou tertiaires (par exemple des trialcanol-amines), et des polydiméthylsiloxanes α,ω-dihydroxylés. Un pareil agent d'aide à la mise en oeuvre, quand on en utilise un, est employé à raison de 1 à 10 parties en poids, et de préférence 2 à 8 parties, pour 100 parties de charge blanche renforçante.

Le procédé de préparation des compositions d'élastomère(s) diénique(s) comprenant une charge blanche renforçante et au moins un agent de couplage peut se faire selon un mode opératoire classique en une ou deux étapes.

Selon le procédé en une étape, on introduit et malaxe dans un mélangeur interne usuel, par exemple de type BANBURY ou de type BRABENDER, tous les constituants nécessaires à l'exception du (ou des) agent(s) de vulcanisation et éventuellement : du (ou des) accélérateurs de vulcanisation et/ou du (ou des) activateur(s) de vulcanisation. Le

résultat de cette première étape de mélange est repris ensuite sur un mélangeur externe, généralement un mélangeur à cylindres, et on y ajoute alors le (ou les) agent(s) de vulcanisation et éventuellement : le (ou les) accélérateur(s) de vulcanisation et/ou le (ou les) activateur(s) de vulcanisation.

Il peut être avantageux pour la préparation de certains articles de mettre en oeuvre un procédé en deux étapes conduites toutes les deux dans un mélangeur interne. Dans la première étape, sont introduits et malaxés soit tous les constituants nécessaires à l'exception du (ou des) agent(s) de vulcanisation et éventuellement : du (ou des) accélérateur (s) de vulcanisation et/ou du (ou des) activateurs de vulcanisation, soit une partie des constituants nécessaires en appliquant la même loi d'exception. Le but de la seconde étape qui suit est essentiellement de faire subir au mélange de la première étape, éventuellement complété par l'addition du (ou des) constituant(s) nécessaire(s) manquant avec application de la même loi d'exception, un traitement thermique complémentaire. Le résultat de cette seconde étape est repris également ensuite sur un mélangeur externe pour y ajouter le (ou les) agent(s) de vulcanisation et éventuellement : le (ou les) accélérateur(s) de vulcanisation, et/ou le (ou les) activateurs de vulcanisation.

La phase de travail en mélangeur interne est opérée généralement à une température allant de 80°C à 200°C, de préférence de 80°C à 180°C. Cette première phase de travail est suivie de la seconde phase de travail en mélangeur externe en opérant à une température plus basse, généralement inférieure à 120°C et de préférence allant de 20°C à 80°C.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de 130°C à 200°C, éventuellement sous pression, pendant un temps suffisant qui peut varier par exemple entre 5 et 90 minutes en fonction notamment de la température de cuisson, du système de vulcanisation adopté et de la cinétique de vulcanisation de la composition considérée.

Les compositions d'élastomère(s) vont servir à préparer des articles en élastomère(s) possédant un corps comprenant lesdites compositions décrites ci-avant. Ces compositions sont particulièrement utiles pour préparer des articles consistant dans des supports de moteurs, des semelles de chaussures, des galets de téléphérique, des joints d'appareillages électroménagers et des gaines de câbles.

Les exemples suivants illustrent la présente invention.

Les analyses par RMN-$^{29}$Si, RMN-$^{1}$H et RMN-$^{13}$C sont faites dans les conditions suivantes :

<u>RMN- $^{29}$Si</u>

<u>Appareillage</u>

Les analyses RMN à une dimension du silicium-29 ont été réalisées avec un spectromètre Bruker AMX 300 et une sonde 10 mm $^{29}$Si sélective fonctionnant avec une fréquence d'observation du silicium à 59 MHz.

Les déplacements chimiques (δ) sont exprimés en ppm, le tétraméthylsilane est utilisé comme référence externe pour les déplacements chimiques $^{1}$H et $^{29}$Si. La température est contrôlée par une unité de température variable (± 0,1°K). Les spectres RMN sont effectués à 300°K.

Pour obtenir les spectres RMN du silicium-29 découplé du proton, nous avons utilisé une séquence d'accumulation avec découplage de type "inverse gated" du proton (WALTZ 16). L'angle de l'impulsion silicium-29 est égal à 45° et la durée entre deux impulsions silicium est fixée à 4,5 secondes. Le signal de précession libre (FID) est obtenu après 4096 accumulations. La largeur spectrale est de 10870 Hz et le nombre de points définissant le signal de précession libre est égal à 32768.

<u>Préparation d'échantillons</u>

Pour les échantillons qui nécessitent l'enregistrement de spectres RMN du silicium à une dimension, environ 2 ml de composés siliciés sont dissous dans 7 ml d'une solution de chloroforme deutérié contenant 2,5.10$^{-2}$ mol/1 de $Fe(acac)_3$ (acac = acétylacétonate).

<u>RMN-$^{1}$H et RMN-$^{13}$C</u>

<u>Appareillage</u>

Préparation d'échantillons : 0,1 ml d'échantillon dans 0,5 ml de $CDCl_3$
Spectromètre : Bruker AMX 300
Sonde: QNP $5_{mm}$ ($^{1}$H, $^{13}$C ,$^{31}$P, $^{19}$F)

Les spectres RMN sont effectués à 300˚K (± 0,1˚K)

Analyse RMN du $^1H$

Nous avons utilisé une séquence d'acquisition simple, avec un angle d'impulsion de 30˚, une durée entre impulsions de 4,6 s, et 256 accumulations. La largeur spectrale est de 4500Hz et aucun traitement mathématique n'est pratiqué. La fréquence d'observation est de 300 MHz.

Analyse RMN du $^{13}C$

Nous avons utilisé une séquence d'accumulation avec découplage du proton (WALTZ 16), avec un angle d'impulsion de 30˚, une durée entre impulsions de 3s, et 8192 accumulations. La largeur spectrale est de 20000Hz et le signal est traité par une fonction exponentielle avant la transformée de Fourier. La fréquence d'observation est de 75 MHz.

Le solvant deutérié ($CDCl_3$) sert à compenser les dérivés éventuelles du champ magnétique et permet de calibrer les spectres en déplacement chimique.

EXEMPLE 1

Cet exemple décrit la préparation du tétrasulfure de bis-monoéthoxydiméthylsilylpropyle (en abrégé MESPT) de formule (III) en mettant en oeuvre la méthode de synthèse F.

Dans un réacteur en verre de 3 litres double enveloppe qui est équipé d'un réfrigérant, d'une agitation mécanique (turbine de rushton), d'un thermocouple, d'un tuyau d'admission de gaz (argon ou $H_2S$) et d'une arrivée pour la pompe péristaltique, 91,9 g d'éthanolate de sodium (1,352 mole, soit l'équivalent de 2 moles pour une mole de $H_2S$) en solution à 21% massique dans l'éthanol (438 g) et 250 ml de toluène sont introduits en pied sous courant d'argon.

L'ensemble est placé sous agitation (200-300 tours/min). Une masse de 65 g en soufre (2,031 moles, soit l'équivalent de 3 moles pour une mole de $H_2S$) est alors additionnée.

Après une purge des circuits à l'argon, l'$H_2S$ (23 g, soit 0,676 mole) est introduit par bullage au moyen d'un tube plongeant, soit pendant 45 à 60 minutes.

La solution passe d'une coloration orange avec des particules jaune - oranges à une coloration brun foncé sans particule.

Sous courant d'argon, le mélange est chauffé à 60˚C durant 1 heure de manière à compléter la conversion en $Na_2S_4$ anhydre.

Le milieu réactionnel passe d'une couleur brun foncé à une couleur rouge-brun avec des particules brunes.

Le milieu réactionnel est alors refroidi à l'aide d'un moyen de réfrigération (à 10-15˚C) pour atteindre une température voisine de 20˚C.

Une masse de 244 g de γ-chloropropyléthoxydiméthylsilane (1,352 moles, soit l'équivalent de 2 moles pour une mole de $H_2S$) est ajoutée au moyen d'une pompe péristaltique (10 ml/min) sur 30 minutes.

Le milieu réactionnel est ensuite chauffé à 75˚C ± 2˚C durant 4h. En cours d'essai, le NaCl précipite. Au bout des 4 heures de chauffage, le milieu est refroidit à température ambiante (20-25˚C). Il prend une couleur orange avec des particules jaunes.

Après dépotage du milieu réactionnel, il est filtré sur carton de cellulose sous pression d'azote dans un filtre en acier inoxydable. Le gâteau est lavé par 2 fois 100ml de toluène. Le filtrat de couleur rouge brun est évaporé sous vide (pression maximum = 3-4.$10^2$ Pa - température maximale = 70˚C).

Une masse de 280 g de tétrasulfure de bis-monoéthoxydiméthylsilylpropyle (0,669 mole) est alors obtenue sous forme d'une huile de couleur jaune - orange. Un contrôle par RMN- $^1H$, par RMN- $^{29}Si$ et par RMN- $^{13}C$ permet de vérifier que la structure obtenue est conforme avec la formule (III) donnée dans la description du premier objet de l'invention.

RMN- $^{29}Si$ : 16.3 ppm (s, $Me_2(OEt)Si$,).

RMN- $^1H$: 0.0- 0.1 ppm ( plusieurs s, $Si(CH_3)_2$, 12H), 0.66 ppm (m, $SiCH_2$, 4H), 1.13 ppm (t, $CH_3CH_2O$ 6H), 1.75 ppm (m, $SiCH_2CH_2$, 4H), 2.64 ppm (t, $CH_2S_2$), 2.8 - 3.0 ppm (plusieurs t, $CH_2S_{x\geq3}$), 3.61 ppm (q, $CH_2O$ 4H).

RMN-$^{13}C$ : -1,95 - -2,2 ppm (plusieurs $CH_3Si$), 15.4- 15.6 ppm (plusieurs $CH_2Si$), 18.5 ppm ($OCH_3CH_2$), 22.5 - 23.5 ppm (plusieurs $SiCH_2CH_2$), 42.36 ppm ($CH_2S_2$), 42.08 ppm ($CH_2S_3$), 42.59 ppm ($CH_2S_4$), 42.85 - 43.5 ppm ($CH_2S_{x\geq5}$), 58.2 ppm ($OCH_2CH_3$).

Le nombre moyen d'atomes de S par molécule de formule (III) est égal à 3,9 ± 0,1 (x = 3,9 ± 0,1).

Le nombre moyen d'atomes de S est calculé par la formule donnée ci-après:

$$x = \frac{\left[\frac{\text{pourcentage pondéral en S total}}{32} - \frac{\text{pourcentage pondéral en S élémentaire résiduel}}{32}\right]}{\left[\frac{\frac{\text{pourcentage pondéral en Si total}}{2}}{28}\right]}$$

Les pourcentages pondéraux en S total et en Si total sont obtenues en analyse élémentaire par la méthode par fluorescence X. Cette méthode globale pour doser le S total et le Si total fait appel à une solubilisation de l'échantillon dans le DMF (diméthylformamide) et non pas à une minéralisation de l'échantillon. L'appareillage utilisé est un spectromètre de fluorescence X de marque PHILIPS TW 2400, équipé d'un tube Rhodium. Le DMSO (diméthylsulfoxyde), solubilisé dans le DMF est utilisé comme étalon pour doser le soufre ; gamme d'étalonnage en S : de 0 à 3000 ppm. Pour doser le silicium, du D4 (octaméthyltétrasiloxane) solubilisé dans le DMF est utilisé comme étalon ; gamme d'étalonnage en Si : de 0 à 3000 ppm. L'échantillon est solubilisé dans le DMF pour la mesure, à raison de 0,5 g d'échantillon pour 40 g de DMF.

Le pourcentage pondéral en soufre élémentaire résiduel est dosé par GPC (Gel Permeation Chromatography) :

- ■ conditions analytiques : colonnes utilisées : 3 colonnes mixtes E PLGEL avec support styrène divinylbenzène, les colonnes étant calibrées par rapport à des étalons de polystyrène de 100 à 50 000 de masse ; détecteur : UV SHIMADZU SPD6A, longueur d'onde d'observation = 270 nm ; pompe d'alimentation en éluant : pompe WATERS ; injecteur : VISP 717+ ; éluant : dichlorométhane ; débit : 1 ml/min ; le standard interne de débit utilisé est le toluène (concentration en toluène dans l'éluant : 2/1000 poids/poids) ;
- ■ étalonnage : volumes injectés : 10 µl pour l'étalon et 20-50 µl pour les échantillons ; gamme des concentrations utilisées : pour l'étalon de soufre élémentaire pur servant à établir la courbe de calibration, on utilise de 10 à 30 mg d'étalon dans 20 ml de dichlorométhane, et pour les échantillons on utilise 200 mg d'échantillon dans 20 ml de dichlorométhane ;
- • dosage : l'étalon et les échantillons sont solubilisés dans le dichlorométhane ; des solutions étalon de soufre sont injectées et une courbe d'étalonnage liant la surface du pic détecté et la concentration en soufre élémentaire injectée est établie ; dans les mêmes conditions, les échantillons sont injectés et la concentration en soufre élémentaire résiduel est mesurée.

Pour le MESPT de formule (III), on trouve les valeurs suivantes : % pondéral en S total = 30,1 %, % pondéral en S élémentaire résiduel = 0,75 %, et % pondéral en Si total = 13,1%, qui conduisent par application de la formule donnée ci-dessus à la valeur calculée de x donnée ci-avant et égale à 3,9.

S'agissant de la distribution molaire des polysulfures du MESPT de formule (III), on trouve les valeurs suivantes, selon l'analyse par RMN-$^{13}$C : $S_2 = 16 \pm 1{,}5\%$, $S_3 = 28 \pm 1{,}5\%$ ,$S_4 = 27 \pm 1\%$ et $S_{\geq 5} = 29 \pm 1.5\%$.

Cette distribution molaire des polysulfures est obtenue de la manière suivante : une expansion (ou grossissement) du spectre RMN-$^{13}$C, entre 41,0 et 44,0 ppm est faite ; ensuite, les trois pics vers 42 ppm, 42,3 ppm et 42,5 ppm sont intégrés (I1, I2 et I3 sont les valeurs des intégrales respectivement), ainsi que le massif situé entre 42,7 ppm et 43,7 ppm environ (par exemple massif allant de 42,85 à 43,5 ppm) correspondant à l'intégrale I4 ; puis la répartition est calculée :

- $$\%\ \text{molaire}\ S_2 = (I2 \times 100) / (I1 + I2 + I3 + I4)$$
- $$\%\ \text{molaire}\ S_3 = (I1 \times 100) / (I1 + I2 + I3 + I4)$$
- $$\%\ \text{molaire}\ S_4 = (I3 \times 100) / (I1 + I2 + I3 + I4)$$

-

$$\% \text{ molaire } S_{\geq 5} = (I4 \times 100) / (I1 + I2 + I3 + I4).$$

On constate donc que, conformément à un mode de préparation préférentiel , le taux molaire de ($S_3$ + $S_4$) est supérieur à 50 %, les polysulfures $S_3$ et $S_4$ représentant ainsi la majorité des polysulfures. Par ailleurs, le taux molaire de $S_2$ est de préférence inférieur à 20 %.

On comprendra que des conditions de synthèse modifiées permettraient d'obtenir d'autres distributions molaires des polysulfures, avec des nombres moyens d'atomes de S par molécule (x) variables mais toujours comprises dans les domaines allant de 3,5 ± 0,1 à 4,5 ± 0,1.

EXEMPLE 2

Cet exemple décrit la préparation du disulfure de bis-monoéthoxydiméthylsilylpropyle (en abrégé MESPD) en mettant en oeuvre la méthode de synthèse F.

Dans un réacteur en verre de 5 litres double enveloppe qui est équipé d'un réfrigérant, d'une agitation mécanique (turbine de rushton), d'un thermocouple, d'un tuyau d'admission de gaz (argon ou $H_2S$) et d'une arrivée pour la pompe péristaltique, 284,2 g d'éthanolate de sodium (4,18 moles, soit l'équivalent de 2 moles pour une mole de $H_2S$) en solution à 21% massique dans l'éthanol (1353,3 g) sont introduits en pied sous courant d'argon.

L'ensemble est placé sous agitation (200-300 tours/min). Une masse de 66,87 g en soufre (2,09 moles, soit l'équivalent de 1 mole pour une mole de $H_2S$) est alors additionnée.

Après une purge des circuits à l'argon, l'$H_2S$ (71,0 g, soit 2,09 moles) est introduit par bullage au moyen d'un tube plongeant, soit pendant 45 à 60 minutes.

La solution devient homogène et prend une couleur marron-brune sans particule.

Sous courant d'argon, le mélange est chauffé à 60°C durant 1 heure de manière à compléter la conversion en $Na_2S_2$ anhydre.

Un précipité jaune apparaît.

Le milieu réactionnel est alors refroidit à l'aide d'un moyen de réfrigération (à 10-15°C) pour atteindre une température voisine de 20°C.

Une masse de 754,4 g de γ-chloropropyléthoxydiméthylsilane (4,18 moles, soit l'équivalent de 2 moles pour une mole de $H_2S$) est ajoutée au moyen d'une pompe péristaltique (10 ml/min) sur 30 minutes.

Le milieu réactionnel est ensuite chauffé à 70°C durant 4h. En cours d'essai, le NaCl précipite. Au bout des 4 heures de chauffage, le milieu est refroidit à température ambiante (20-25°C). Il prend une couleur verte avec des particules jaunes.

Après dépotage du milieu réactionnel, il est filtré sur carton de cellulose sous pression d'azote dans un filtre en acier inoxydable. Le filtrat de couleur orange est évaporé sous vide (pression maximum = $5.10^2$ Pa - température maximale = 40°C).

Une masse de 739,74 g de disulfure de bis-monoéthoxydiméthylsilylpropyle (2,089 moles) est alors obtenue sous forme d'une huile de couleur kaki. Un contrôle par RMN- $^1$H et par RMN- $^{29}$Si permet de vérifier que la structure obtenue est conforme avec la formule :

$$(C_2H_5O)(CH_3)_2Si\text{-}(CH_2)_3\text{-}Sy\text{-}(CH_2)_3\text{-}Si(CH_3)_2(OC_2H_5)$$

RMN- $^{29}$Si : 16.5 ppm (s, $Me_2$(OEt)Si,).

RMN- $^1$H : 0.03 ppm (s, $Si(CH_3)_2$, 12H), 0.61 ppm (m, $SiCH_2$, 4H), 1.11 ppm (t, $CH_3CH_2O$ 6H), 1.65 ppm (m, $SiCH_2CH_2$, 4H), 2.62 ppm (t, $CH_2S_2$), 2.80 ppm (t, $CH_2S_3$), 3.58 ppm (q, $CH_2O$ 4H).

RMN- $^{13}$C: -1,8 - -2,5 ppm (plusieurs $CH_3Si$), 15.1 ppm ($CH_2Si$), 18.5 ppm ($CH_3CH_2O$), 22.8 - 23.2 ppm (plusieurs $SiCH_2CH_2$), 42.4 ppm ($CH_2S_2$), 42.1 ppm ($CH_2S_3$), 58.2 ppm ($OCH_2CH_3$).

Le nombre moyen d'atomes de S par molécule de MESPD, calculé comme indiqué ci-avant dans l'exemple 1, est égal à 1,9 (% pondéral en S total = 15,7 %, % pondéral en S élémentaire résiduel = 0 % et % pondéral en Si total = 14,4 %). Compte tenu de la valeur calculée de y, égale à 1,9, et de l'écart-type considéré (± 0,1), il en résulte que la valeur vraie de y est proche de ou égale à 2.

S'agissant de la distribution molaire des polysulfures du MESPD, on trouve les valeurs suivantes, selon l'analyse par RMN-$^{13}$C: $S_2$ = 94 %, et $S_3$ = 6 %.

Cette distribution molaire des polysulfures est obtenue de la manière suivante : une expansion (ou grossissement) du spectre RMN-$^{13}$C, entre 41,0 et 44,0 ppm est faite ; ensuite, les deux pics à 42,1 ppm et 42,4 ppm sont intégrés (I1, I2 sont les valeurs des intégrales respectivement) ; puis la répartition est calculée :

- $$\% \text{ molaire } S_2 = (I2 \times 100) / (I1 + I2)$$

- $$\% \text{ molaire } S_3 = (I1 \times 100) / (I1 + I2).$$

EXEMPLE 3 ET ESSAIS 1 A 4

Cet exemple et ces essais ont pour but de démontrer les performances de couplage améliorées d'un monoorganoxysilane tétrasulfuré de formule (III) ; ces performances sont comparées : d'une part à celles d'agents de couplage à base de silanes disulfurés, comportant l'un, trois fonctions organoxysilyles (silane TESPD) et, l'autre, une seule fonction organoxysilyle (silane MESPD) ; et d'autre part à celle d'un agent de couplage à base d'un silane tétrasulfuré, comportant trois fonctions organoxysilyles (silane TESPT).

On compare 5 compositions d'élastomères diéniques représentatives de formulations de semelles de chaussures. Ces 5 compositions sont identiques aux différences près qui suivent :

- composition n° 1 (témoin 1) : agent de couplage à base de silane TESPD (5,8 pce ou parties en poids pour 100 parties d'élastomères) utilisé seul ; rappel :

  TESPD : disulfure de bis-triéthoxysilylpropyle de formule :

  $$(C_2H_5O)_3Si\text{-}(CH_2)_3\text{-}S_2\text{-}(CH_2)_3\text{-}Si(OC_2H_5)_3$$

- composition n° 2 (témoin 2): agent de couplage à base de silane MESPD (4,3 pce) utilisé seul ; rappel:

  MESPD : disulfure de bis-monoéthoxydiméthylsilylpropyle de formule :

  $$(C_2H_5O)(CH_3)_2\ Si\text{-}(CH_2)_3\ \text{-}S_2\text{-}(CH_2)_3\text{-}Si(CH_3)_2(OC_2H_5)$$

- composition n° 3 (témoin 3) : agent de couplage à base de silane TESPT (6,6 pce) utilisé seul ; rappel :

  TESPT : tétrasulfure de bis-triéthoxysilylpropyle de formule :

  $$(C_2H_5O)_3Si\text{-}(CH_2)_3\ \text{-}S_4\text{-}(CH_2)_3\text{-}Si(OC_2H_5)_3$$

- composition n° 4 (témoin 4) : MESPD (4,3 pce) auquel est associé 0,8 pce de soufre ;

- composition n° 5 (exemple 3) : agent de couplage à base de tétrasulfure de bis-monoéthoxydiméthylsilylpropyle ou MESPT (5,1 pce) de formule :

  $$(C_2H_5O)(CH_3)_2\ Si\text{-}(CH_2)_3\ \text{-}S_4\text{-}(CH_2)_3\text{-}Si(CH_3)_2(OC_2H_5)$$

Les agents de couplage sont utilisés ici à un taux isomolaire en silicium, c'est-à-dire que l'on utilise quelle que soit la composition, le même nombre de groupes éthoxysilyles vis-à-vis de la silice et de ses groupes hydroxyle de surface.

1) Constitution des compositions :

Dans un mélangeur interne de type BRABENDER, on prépare les compositions suivantes dont les taux des différents constituants, exprimés en pce (parties en poids pour 100 parties d'élastomères), sont indiqués dans le tableau I donné ci-après.

Tableau I

| Compositions | | Témoin 1 | Témoin 2 | Témoin 3 | Témoin 4 | Ex. 3 |
|---|---|---|---|---|---|---|
| Caoutchouc SBR | (1) | 96 | 96 | 96 | 96 | 96 |
| Caoutchouc BR | (2) | 30 | 30 | 30 | 30 | 30 |
| Silice | (3) | 80 | 80 | 80 | 80 | 80 |
| Oxyde de zinc | (4) | 3,0 | 3,0 | 3,0 | 3,0 | 3,0 |
| Acide stéarique | (5) | 2,0 | 2,0 | 2,0 | 2,0 | 2,0 |
| Cire microcristalline | (6) | 1,0 | 1,0 | 1,0 | 1,0 | 1,0 |
| Plastifiant | (7) | 10 | 10 | 10 | 10 | 10 |
| Permanax 6 PPD | (8) | 1,5 | 1,5 | 1,5 | 1,5 | 1,5 |
| Silane TESPD | (9) | 5,8 | -- | --- | --- | --- |
| Silane MESPD | (10) | -- | 4,3 | --- | 4,3 | --- |
| Silane TESPT | (11) | -- | -- | 6,6 | --- | --- |
| Silane MESPT | (12) | --- | --- | --- | --- | 5,1 |
| CBS | (13) | 1,5 | 1,5 | 1,5 | 1,5 | 1,5 |
| DPG | (14) | 2,0 | 2,0 | 2,0 | 2,0 | 2,0 |
| TBZTD | (15) | 0,2 | 0,2 | 0,2 | 0,2 | 0,2 |
| Soufre | (16) | 1,5 | 1,5 | 1,5 | 2,3 | 1,5 |

(1) copolymère styrène-butadiène en solution contenant 37,5 pce d'huile, commercialisé par la Société BAYER sous la référence S-SBR 5525-1 ;
(2) Polybutadiène à haut taux de forme cis 1,4, commercialisé par la Société KUMHO sous la référence Kosyn KBR 01 ;
(3) Silice hautement dispersible Zéosil 1165 MP, commercialisée par la Société RHODIA SILICES ;
(4) et (5) Activateurs de vulcanisation ;
(6) Agent d'aide à la mise en oeuvre qui est une cire commercialisée par la Société LA CERESINE sous la marque ® CERELUX 120 ;
(7) Huile naphténique, commercialisée par la Société NYNAS sous la dénomination Nytex 820 ;
(8) Protecteur antiozone à base de N-phényl-N'-(diméthyl-1,3 butyl)-paraphénylènediamine, commercialisé par la Société AKZO Chemicals ;
(9) Silane commercialisé par la Société WITCO sous la dénomination Silquest A1589 (y voisin de 2) ;
(10) Silane préparé comme indiqué dans l'exemple 2 ;
(11) Silane commercialisé par la Société WITCO sous la dénomination Silquest A1289 (y voisin de 4) ;
(12) Silane préparé comme indiqué dans l'exemple 1 ;
(13) Accélérateur de vulcanisation à base de N-cyclohexyl-2-benzothiazyl-sulfénamide ;
(14) Accélérateur de vulcanisaiton à base de diphényl-guanidine ;
(15) Accélérateur de vulcanisation à base de disulfure de tétrabenzylthiurame, commercialisé par la Société FLEXSYS ;
(16) Agent de vulcanisation ajouté sur mélangeur à cylindres.

2) Préparation des compositions :

Chaque composition est préparée de la manière suivante :

Dans un mélangeur interne de type BRABENDER tournant à 100 tours/minute, on réalise les phases 1 et 2 suivantes, en introduisant les divers constituants dans l'ordre, aux temps et aux températures indiquées ci-après :

● Phase 1 :

| Temps | Température | Constituants |
|---|---|---|
| t0 | 80°C | Caoutchoucs SBR et BR |

(suite)

● Phase 1 :

| Temps | Température | Constituants |
|---|---|---|
| t0 + 1,5 min | 100°C | 1/3 silice + agent de couplage + plastifiant |
| t0 + 2,5min | 120°C | 2/3 silice + acide stéarique + cire microcristalline |
| t0 + 5min | 150°C | vidange du mélangeur |

● Phase 2 :

| Temps | Température | Constituants |
|---|---|---|
| t0 | 80°C | Charge du mélange issu de la phase 1 |
| t0 + 0,5 min | 110°C | oxyde de zinc + protecteur 6 PPD |
| t0 + 3 min | 140°C | vidange du mélangeur |

Le mélange obtenu à l'issu de la phase 2 est introduit ensuite sur un mélangeur à cylindres, maintenu à 60°C, et on introduit le soufre, le CBS, la DPG et le TBZTD. Après homogénéisation pendant 2 minutes, le mélange final est calandré sous la forme de feuilles de 2,5 à 3 mm d'épaisseur.

3) Propriétés rhéologiques des compositions :

Les mesures sont réalisées sur les compositions à l'état cru. On a porté dans le tableau II suivant les résultats du test de rhéologie qui est conduit à 165°C pendant 30 minutes à l'aide d'un rhéomètre MONSANTO 100 S.

Selon ce test la composition à tester est placée dans la chambre d'essai régulée à la température de 165°C, et on mesure le couple résistant, opposé par la composition, à une oscillation de faible amplitude d'un rotor biconique inclus dans la chambre d'essai, la composition remplissant complètement la chambre considérée. A partir de la courbe de variation du couple en fonction du temps, on détermine : le couple minimum qui reflète la viscosité de la composition à la température considérée ; le couple maximum et le delta-couple qui reflètent le taux de réticulation entraîné par l'action du système de vulcanisation ; le temps T-90 nécessaire pour obtenir un état de vulcanisation correspondant à 90 % de la vulcanisation complète (ce temps est pris comme optimum de vulcanisation) ; et le temps de grillage TS-2 correspondant au temps nécessaire pour avoir une remontée de 2 points au dessus du couple minimum à la température considérée (165°C) et qui reflète le temps pendant lequel il est possible de mettre en ooeuvre les mélanges crus à cette température sans avoir d'initiation de la vulcanisation.

Les résultats obtenus sont indiqués dans le tableau II.

Tableau II

| Rhéologie MONSANTO | Témoin 1 | Témoin 2 | Témoin 3 | Témoin 4 | Exemple 3 |
|---|---|---|---|---|---|
| Couple mini | 14,3 | 13,5 | 13,1 | 13,1 | 12,8 |
| Couple maxi | 59,3 | 59,4 | 68,7 | 67,3 | 68 |
| Delta-couple | 45 | 45,9 | 55,6 | 54,2 | 55,2 |
| TS-2 (minutes) | 4,28 | 4,73 | 3,23 | 3,65 | 3,23 |
| T-90 (minutes) | 7,41 | 6,87 | 7,38 | 5,48 | 5,79 |

On constate que, quelle que soit la partie soufrée du silane considéré (di ou tétrasulfure), le passage d'un silane triéthoxylé à un silane monoéthoxylé entraîne une accélération significative de la vitesse de vulcanisation se traduisant par l'obtention d'un temps T-90 plus court lors de l'essai Monsanto (comparer témoins 1 et 2 d'une part et témoin 3 et exemple 3 d'autre part).

Si nous considérons l'ensemble des propriétés rhéologiques, nous pouvons constater que, de tous les silanes testés, le silane monoéthoxylé tétrasulfuré (exemple 3) apporte le meilleur compromis de propriétés avec un couple mini plus bas, un delta-couple élevé et une cinétique de vulcanisation rapide.

4) Propriétés mécaniques des vulcanisats :

Les mesures sont réalisées sur les compositions uniformément vulcanisées 30 minutes à 165°C.

Les propriétés mesurées et les résultats obtenus sont rassemblés dans le tableau III suivant :

Tableau III

| Propriétés mécaniques | | Témoin 1 | Témoin 2 | Témoin 3 | Témoin 4 | Exemple 3 |
|---|---|---|---|---|---|---|
| Module 10 % | (1) | 0,69 | 0,55 | 0,76 | 0,69 | 0,66 |
| Module 100% | (1) | 1,96 | 1,85 | 2,51 | 2,55 | 2,55 |
| Module 300% | (1) | 8,8 | 8,0 | 11,2 | 11,7 | 11,2 |
| Allongement à la rupture | (1) | 480 | 500 | 415 | 380 | 450 |
| Résistance à la rupture | (1) | 17,5 | 17,0 | 17,3 | 16 | 18,4 |
| Indices de renforcement : M300%/M100% | | 4,49 | 4,38 | 4,46 | 4,6 | 4,39 |
| Dureté Shore A | (2) | 64 | 63 | 68 | 64 | 68 |

(1) Les essais de traction sont réalisés conformément aux indications de la norme NF T 46-002 avec des éprouvettes de type H2. Les modules 10 %, 300 %, et la résistance à la rupture sont exprimés en MPa ; l'allongement à la rupture est exprimé en %.
(2) La mesure est réalisée selon les indications de la norme ASTM D 3240. La valeur donnée est mesurée à 15 secondes.

L'examen des différents résultats conduit aux observations suivantes :

- ● on constate, dans le cas des agents de couplage disulfurés (témoins 1 et 2), que le passage du silane triéthoxylé (témoin 1) au silane monoéthoxylé (témoin 2) entraîne au niveau des vulcanisats une dégradation significative de certaines des propriétés mécaniques : on note ainsi, pour les propriétés suivantes, les diminutions (exprimées en %) de valeurs indiquées ci-après : module 100 % : passage de 1,96 à 1,85, soit une diminution de - 5,6 % ; module 300 % : passage de 8,8 à 8,1, soit une diminution de - 7,9 % ; indice de renforcement : passage de 4,49 à 4,38, soit une diminution de - 2,4 % ; la résistance à la rupture (passage de 17,5 à 17,0, soit une diminution de - 2,9 %) et la dureté Shore A (passage de 64 à 63, soit upe diminution de -1,6 %) sont dégradées mais à un taux moindre ;
- ● on constate, dans le cas des agents de couplage tétrasulfurés (témoin 3 et exemple 3), que le passage du silane triéthoxylé (témoin 3) au silane monoéthoxylé (exemple 3) n'entraîne pas au niveau des vulcanisats de pareilles dégradations pour les propriétés mécaniques considérées ci-avant ; ces dernières ont leurs valeurs qui sont, soit moins dégradées (cf. indice de renforcement où on note une baisse de seulement - 1,6 %), soit maintenues (cf. module 300 % et dureté Shore A), soit améliorées (cf. résistance à la rupture où on note un gain de + 6,4 %) ;
- ● on constate encore, pour le silane monoéthoxylé et tétrasulfuré (exemple 3), outre le compromis de propriétés rhéologiques déjà souligné, un compromis de propriétés mécaniques plus intéressant que celui obtenu pour le silane monoéthoxylé et disulfuré (témoin 2) ; ainsi, on note pour le vulcanisat de l'exemple 3 : des niveaux de propriétés qui sont augmentés de + 20 % pour le module 10 %, de + 37,8 % pour le module 100 %, de + 38,3 % pour le module 300 %, de + 8,2 % pour la résistance à la rupture et de + 7,9 % pour la dureté Shore A ;
- ● de telles différences (dureté, modules, résistance à la rupture) peuvent être attribuées à la teneur en soufre plus élevée des silanes tétrasulfurés par rapport aux silanes disulfurés en général (comparer aussi les témoins 1 et 3). Nous avons donc ajouté du soufre sur le mélangeur à cylindres (cf. mélange témoin 4) pour compenser la différence de teneur en soufre entre les deux silanes monoéthoxylés (témoin 2 et exemple 3) et pour vérifier s'il était ainsi possible de retrouver les niveaux de propriétés obtenus avec le silane tétrasulfuré de l'exemple 3. La comparaison entre le témoin 4 (avec silane monoéthoxylé et disulfuré avec du soufre compensé sur mélangeur à cylindres) et l'exemple 3 (silane monoéthoxylé et tétrasulfuré) conduit aux autres observations suivantes :

  - on constate que la complémentation en soufre permet d'augmenter le couple maxi et le delta-couple des mélanges crus mettant ainsi le témoin 4 et l'exemple 3 à des niveaux comparables,
  - de même au niveau des propriétés mécaniques des vulcanisats, les modules du témoin 4 sont relevés au niveau de ceux de l'exemple 3,
  - par contre, on constate une dégradation très sensible des propriétés ultimes et en particulier de l'allongement

à la rupture (-15.6%) et de la résistance à la rupture (-13 %) des vulcanisats,

- de plus, de manière surprenante, la dureté shore, contrairément aux modules, est peu modifiée par rapport au témoin 2 par la complémentation en soufre et n'atteind pas le niveau de l'exemple 3.

L'addition complémentaire de soufre sur cylindres dans la composition comprenant le silane monoéthoxylé et disulfuré (témoin 2) n'a donc pas permis de retrouver l'excellent compromis de propriétés apporté par le silane monoéthoxylé et tétrasulfuré (exemple 3), puisque les propriétés ultimes sont sensiblement affectées par cette addition complémentaire de soufre (témoin 4).

## Revendications

1. Utilisation, dans une composition d'élastomère(s) diénique(s) comprenant une charge blanche à titre de charge renforçante, d'au moins un monoorganoxysilane polysulfuré à rotule propylène de formule (III) suivante :

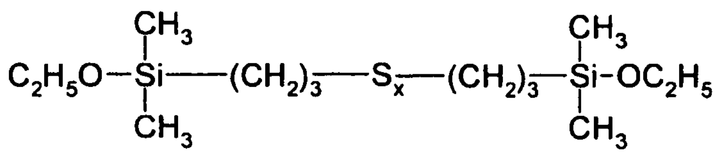

(III) (en abrégé MESPT)

dans laquelle le symbole x est un nombre, entier ou fractionnaire, allant de 3,5 ± 0,1 à 4,5 ± 0.1,
pour accélérer, par rapport aux silanes MESPD (disulfure de bis-monoéthoxydiméthylsilylpropyle), TESPD (disulfure de bis-triéthoxysilylpropyle) et TESPT (tétrasulfure de bis-triéthoxysilylpropyle), la cinétique de vulcanisation de l'(des) élastomère(s).

2. Utilisation selon la revendication 1, le symbole x étant un nombre, entier ou fractionnaire, allant de 3,8 ± 0,1 à 4,2 ± 0,1.

## Claims

1. Use, in a composition of diene elastomer(s) comprising a white filler as reinforcing filler, of at least one polysulphide monoorganoxysilane with a propylene linking unit of following formula (III) :

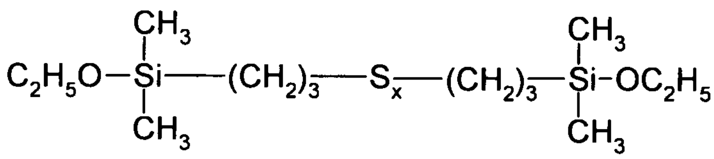

(III)(abbreviated to MESPT)

in which the x symbol is an integer or fractional number ranging from 3.5 ± 0.1 to 4.5 ± 0.1,
for accelerating, with respect to MESPD (bis(monoethoxydimethylsilylpropyl) disulphide), TESPD (bis(triethoxysilylpropyl) disulphide) and TESPT (bis(triethoxysilylpropyl) tetrasulphide) silanes, the kinetics of vulcanization of the elastomer(s).

2. Use according to claim 1, the x symbol being an integer or fractional number ranging from 3.8 ± 0.1 to 4.2 ± 0.1.

## Patentansprüche

1. Verwendung, in einer Zusammensetzung von dienischem/n Elastomer/en, die einen weißen Füllstoff als Verstärkungsfüllstoff enthält, von mindestens einem Propylen verknüpften Monoorganoxysilan Polysulfid der folgenden Formel (III):

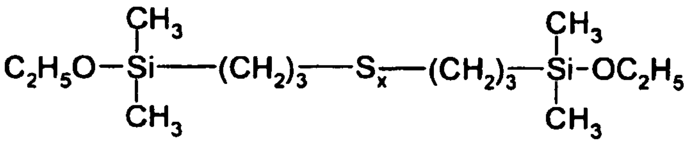

(III)(abgekürzt MESPT)

wobei das Symbol x eine ganze Zahl oder eine Bruchzahl von 3,5 ±0,1 bis 4,5 ±0,1 ist, zur Beschleunigung, hinsichtlich der Silane MESPD (Bis-(monoethoxydimethylsilyl-propyl)disulfid), TESPD (Bis-(triethoxysilylpropyl)disulfid) und TESPT (Bis-(triethoxysilylpropyl)tetrasulfid), der Kinetik der Vulkanisation des/r Elastomers/e.

2. Verwendung nach Anspruch 1, wobei das Symbol x eine ganze Zahl oder eine Bruchzahl von 3,8 ± 0,1 bis 4,2 ± 0,1 ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2149339 A
- FR 2206330 A
- US 3842111 A
- US 3873489 A
- US 3997581 A
- US 5652310 A
- US 5684171 A
- US 5684172 A
- EP 1043357 A
- EP 0848006 A
- FR 2260585 A
- US 6066752 A
- US 5489701 A
- US 4125552 A
- US 5403570 A
- WO 9509127 A
- WO 9509128 A
- EP 0735088 A
- EP 0810258 A


### Littérature non-brevet citée dans la description


- **A. Hunsche.** *Kautschuk Gummi, Kunststoffe,* 1997, vol. 80, 881
- *Kautschuk Gummi, Kunststoffe,* 1998, 525
- **BRUNAUER ; EMMETT ; TELLER.** *The Journal of the American Chemical Society,* 1938, vol. 60, 309